# EUROPÄISCHE PATENTSCHRIFT

(11) **EP 3 460 721 B1**
(45) Veröffentlichungstag und Bekanntmachung des Hinweises auf die Patenterteilung: **10.01.2024**
(21) Anmeldenummer: 18195712.7
(22) Anmeldetag: 20.09.2018
(51) Int. Cl.: G06K 19/077

(54) **RFID-ETIKETT MIT SCHUTZ DER RFID-FUNKTION**
RFID TAG WITH PROTECTION OF THE RFID FUNCTION
ÉTIQUETTE RFID À PROTECTION DE LA FONCTION RFID

(30) Priorität: 22.09.2017 DE 102017122052
(43) Veröffentlichungstag der Anmeldung: 27.03.2019
(73) Patentinhaber: Schreiner Group GmbH & Co. KG, 85764 Oberschleissheim (DE)
(72) Erfinder: Jaeger, Maximilian, 80687 München (DE); Krüger, Sabine, 80995 München (DE); Kuczera, Christian, 81825 München (DE); Probian, Dirk, 86405 Meitingen (DE); Rehm, Arne, 80687 München (DE); Roß, Gerhard, 82256 Fürstenfeldbruck (DE)
(74) Vertreter: Epping - Hermann - Fischer

(56) Entgegenhaltungen:
- EP-A1- 1 594 082
- DE-A1-102006 047 714
- DE-A1-102008 021 231
- JP-A- 2006 146 521
- US-A1- 2007 194 135
- US-A1- 2008 295 318
- US-A1- 2009 305 635
- US-B1- 6 478 228
- US-B1- 6 667 092

## Beschreibung

Die Erfindung betrifft ein RFID-Etikett mit Schutz der RFID-Funktion, insbesondere mit einer Schutzfunktion für einen RFID-Transponderchip bei einer mechanischen Belastung des RFID-Etiketts.

Ein RFID-Etikett umfasst ein RFID-Inlay mit einem RFID-Transponderchip, an den eine Antennenstruktur angeschlossen ist. Bei einem RFID-Etikett sind der Transponderchip und dessen Verbindung zur Antenne diejenigen Stellen, die am sensibelsten auf mechanische Belastungen reagieren. Bei der Verarbeitung von RFID-Etiketten wird auf diese Stellen unter anderem durch Umlenk- und Anpressrollen einer Verarbeitungsmaschine Druck ausgeübt.

Wenn das RFID-Etikett nach seiner Herstellung auf den zu etikettierenden Körper aufgebracht wird, besteht die Gefahr, dass der Transponderchip durch mechanische Krafteinwirkung beschädigt wird oder die Verbindung zwischen der Antennenstruktur und dem Transponderchip aufgrund einer mechanischen Belastung abreißt. Üblicherweise bricht dabei der Klebstoff als Bindematerial zwischen dem Chip und der Antennenstruktur. Insbesondere bei einem RFID-Etikett, das als ein Rundum-Etikett ausgebildet ist, und auf ein Gefäß, beispielsweise einen zylindrischen Behälter, eine Ampulle, ein Vial, eine Spritze oder ein sonstiges Aufbewahrungsgefäß für eine medizinische Substanz, aufgeklebt ist, können durch den Kontakt direkt aneinander reibender Gefäße ebenfalls Beschädigungen an dem RFID-Transponderchip beziehungsweise der Verbindung zur Antennenstruktur auftreten. Eine Möglichkeit zum Schutz der elektronischen Funktionalität eines RFID-Etiketts besteht darin, direkt auf dem Transponderchip eine Schutzabdeckung in Form eines Lacks (Lackdom) vorzusehen. Ein derartiger Lackdom bietet jedoch oftmals nur unzureichenden Schutz für den Chip, da nur ein geringer Teil der mechanischen Belastung abgeleitet wird und auf gekrümmten Oberflächen die zusätzliche Versteifung nachteilig ist. Zum Abdecken des Chips des RFID-Inlays ist des Weiteren ein eigener zusätzlicher Maschinendurchlauf notwendig.

Zum Schutz des RFID-Transponderchips kann in einem zu beklebenden Bauteil beziehungsweise Gefäß, eine Aussparung vorgesehen werden, über der der Chip des Inlays beim Aufkleben des Etiketts liegt. Nachteilig bei einer derartigen Lösung ist, dass das zu beklebende Bauteil beziehungsweise Gefäß aufgrund der Aussparung eigens angepasst werden muss. Eine solche Ausgestaltungsform ist daher wenig flexibel und oftmals entsprechen die modifizierten Bauteile beziehungsweise Gefäße nicht mehr den vorgeschriebenen Standards. Aufgrund der Ausnehmung im Material treten unweigerlich Materialschwächungen auf. Zusätzlich können Verspannungen entstehen. Die Materialschwächungen und Verspannungen führen letztendlich zu erhöhten Ausfällen bei der Produktion der Bauteile beziehungsweise Gefäße.

In den Veröffentlichungen US 2008/0295318 A1, DE 102008021231 A1, EP 1562140 B1, US 2007/194135 A1, EP 1 594 082 A1, WO 2005/109331 A1, US 2009/0305635 A1, US 6,478,228 B1 und US 6,667,092 B1 sind RFID-Etiketten beschrieben, bei denen zwei Folienlagen durch Abstandshalter zueinander beabstandet angeordnet sind. In der Veröffentlichung DE 102006047714 A1 ist ein RFID-Etikett mit Abstandhaltern beschrieben, um mehrere Etiketten übereinander zu stapeln. Die EP 1 594 082 offenbart den Oberbegriff von Anspruch 1.

Ein Anliegen der vorliegenden Erfindung ist es, ein RFID-Etikett mit Schutz der RFID-Funktion anzugeben, bei dem der RFID-Transponderchip und die Verbindungsstelle von der Antennenstruktur zu dem RFID-Transponderchip, vor einer Beschädigung infolge von mechanischen Belastungen bei der Verarbeitung, dem Aufbringen und/oder der Nutzung des Etiketts weitestgehend geschützt sind.

Eine Ausführungsform eines RFID-Etiketts mit Schutz der RFID-Funktion vor einer Beschädigung aufgrund einer mechanischen Belastung ist im Patentanspruch 1 angegeben.

Das RFID-Etikett umfasst einen RFID-Transponderchip und ein Trägersubstrat, auf dem der RFID-Transponderchip angeordnet ist. Darüber hinaus weist das RFID-Etikett mehrere Strukturelemente auf, wobei die Strukturelemente in senkrechter Projektion zu dem RFID-Transponderchip seitlich versetzt zu dem RFID-Transponderchip angeordnet sind.

Unter einer senkrechten Projektion ist im Folgenden eine Draufsicht auf das RFID-Etikett und eine dabei angenommene Durchsicht durch die einzelnen Lagen des Etiketts zu verstehen, wobei lediglich der RFID-Transponderchip und die Strukturelemente sichtbar sind. Bei einer derartigen senkrechten Projektion liegen die Strukturelemente nicht deckungsgleich über dem RFID-Transponderchip, sondern sind seitlich beziehungsweise in horizontaler Richtung versetzt zu dem RFID-Transponderchip angeordnet.

Das RFID-Etikett kann neben dem Trägersubstrat mindestens eine weitere Folienlage aufweisen. Die Strukturelemente können auf dem Trägersubstrat oder auf der mindestens einen weiteren Folienlage angeordnet sein. Die mindestens eine weitere Folienlage kann in dem Folienaufbau des RFID-Etiketts über dem Trägersubstrat und damit über dem RFID-Transponderchip angeordnet sein. Die mindestens eine weitere Folienlage kann beispielsweise auf ihrer Oberseite eine Beschriftung aufweisen. Die Strukturelemente können auf der Oberseite oder einer Unterseite der mindestens einen weiteren Folienlage angeordnet sein. Falls der Folienaufbau mehr als eine weitere Folienlage aufweist, können die Strukturelemente zwischen zwei Folienlagen angeordnet sein. Das RFID-Etikett kann insbesondere als ein Rundum-Etikett ausgebildet sein.

Die Strukturelemente können beispielsweise als ein gedruckter Punkt, eine Linie, ein Halbkreis, ein Kreis, ein Quadrat oder ein Rechteck ausgebildet sein oder aber eine sonstige geometrische Grundform aufweisen. Die mehreren Strukturelemente können als gedruckte Punkte, Linien, Halbkreise, Kreise, Quadrate, Rechtecke oder als sonstige geometrische Grundformen ausgebildet sein. Die Strukturelemente können aus einem Lack, beispielsweise einem Haptik-Lack, ausgebildet sein. Ein derartiger Haptik-Lack wird üblicherweise eingesetzt, um auf einem Etikett eine erhabene Struktur als Kennzeichnung vorzunehmen, die durch Ertasten erfasst werden kann. Die Strukturelemente können beispielsweise auch aus ausgehärtetem Klebstoff ausgebildet sein.

Die Strukturelemente sind in dem Folienaufbau des RFID-Etiketts in senkrechter Projektion beabstandet zu dem RFID-Transponderchip angeordnet. Die mehreren Strukturelemente sind auch auf der entsprechenden Folienlage, auf der sie aufgebracht sind, zueinander beabstandet angeordnet.

Die Strukturelemente können in senkrechter Projektion zu dem Transponderchip in einem Abstand um den Transponderchip herum, beispielsweise in einem Muster, angeordnet sein. Die Abstände stellen dabei sicher, dass der Transponderchip trotz der vorhandenen Positionierungstoleranzen bei der Herstellung immer von den Strukturelementen umgeben ist, insbesondere, wenn das Etikett als ein Rundum-Etikett ausgebildet ist und auf einen Rundkörper aufgeklebt ist. In senkrechter Projektion kann der RFID-Transponderchip an allen Seiten oder nur an einigen Seiten von den Strukturelementen umgeben sein.

Die Strukturelemente sind bei einer senkrechten Projektion von oben auf das RFID-Etikett so um die Position des Transponderchips angeordnet, dass jeglicher mechanischer Druck, beispielsweise eine Kraft, die von oben auf das RFID-Etikett einwirkt, durch die Strukturelemente selbst, das heißt neben dem Chip und somit an unkritischen Stellen, aufgenommen wird. Die Positionierung der Strukturelemente erfolgt dabei so, dass die Strukturelemente den mechanischen Druck anstelle des Transponderchips aufnehmen, auch wenn das Etikett als Rundum-Etikett ausgebildet und um einen engen Radius zum Aufkleben auf einen Rundkörper, zum Beispiel eine kleine Flasche, gebogen wird. Durch Umwickeln eines Gefäßes mit dem Etikett kommen der Chip und die Strukturelemente so übereinander zum Liegen, dass die Schutzfunktion gegeben ist.

Die Strukturelemente wirken als Abstandshalter zu einer externen Einrichtung, beispielsweise zu Anpress- oder Umlenkrollen einer Verarbeitungsmaschine, über die das Etikett beim Herstellen oder Applizieren geführt wird. Die Strukturelemente können auch als Abstandshalter zu einer darüber angeordneten Folienlage des RFID-Etiketts wirken.

Die Strukturelemente können beispielsweise auf dem Trägersubstrat in einem Abstand zu dem Transponderchip angeordnet sein. Die mehreren Strukturelemente können beabstandet untereinander angeordnet werden. Die als Abstandshalter wirkenden Strukturelemente gewährleisten, dass der RFID-Transponderchip bei einer mechanischen Belastung von oben auf das Etikett, nicht mit der von außen wirkenden Belastungsquelle (z.B. Umlenk- oder Anpressrolle) in Berührung kommt, so dass die auf das Etikett einwirkenden Kräfte von dem Transponderchip und den angeschlossenen Abschnitten der Antennenstruktur ferngehalten werden. Die geometrische Form und die Abstände mehrerer Strukturelemente zueinander sind so zu wählen, dass die von außen wirkenden Belastungseinrichtungen nicht mit dem RFID-Transponderchip und gegebenenfalls
der Verbindungsstelle zwischen Transponderchip und Antennenstruktur in Berührung kommen.

Die Strukturelemente werden in ausreichender Höhe auf dem Trägersubstrat oder auf der Ober- oder Unterseite der einen weiteren Folienlage angeordnet. Gemäß einer möglichen Ausführungsform sind die Strukturelemente beispielsweise doppelt so hoch wie der Transponderchip. Die Form und die Position der Strukturelemente sind genau auf das RFID-Inlay, die spätere Verarbeitung (z.B. Applizieren des Etiketts auf das Gefäß) und die Anwendung bzw. Verwendung im applizierten Zustand des etikettierten Gefäßes anpassbar.

Die Strukturelemente werden beispielsweise mittels eines Druckverfahrens auf eine der Schichten/Folienlagen des RFID-Etiketts aufgebracht. Das Drucken der Strukturelemente kann im gleichen Durchlauf wie der Druck des eigentlichen (grafischen) Druckbildes des Etiketts erfolgen. Dadurch können die Kosten bei der Herstellung reduziert werden. Insbesondere da die Strukturelemente gedruckt werden, ist auch keine zusätzliche Materialschicht notwendig, die ansonsten beispielsweise als Schutzschicht ganzflächig über dem RFID-Transponderchip angeordnet werden müsste. Dies verringert einerseits die Herstellkosten des Etiketts und ermöglicht es andererseits, dass das Etikett eine geringe Höhe aufweist. Die geringe Höhe des Etiketts ist insbesondere von Vorteil, wenn das RFID-Etikett als ein Rundum-Etikett ausgelegt ist, das aufgrund seiner geringen Höhe um enge Radien gewickelt werden kann und dennoch einen Schutz für die RFID-Funktion bereitstellt.

Neben der Ausbildung der Strukturelemente als gedruckte Lack- oder Klebstoffpunkte, können die Strukturelemente beispielsweise als dünne Kunststoff-, Gummi-/Kautschuk- oder Kork-Plättchen ausgestaltet sein. Derartige Strukturelemente könnten beispielsweise im Spendebetrieb auf eine der Lagen des RFID-Etiketts aufgebracht werden.

Die Erfindung wird im Folgenden anhand von Figuren, die Ausführungsformen des RFID-Etiketts zeigen, näher erläutert. Es zeigen:
Figur 1 einen Querschnitt durch eine Ausführungsform eines RFID-Etiketts mit Schutz der RFID-Funktion mit Strukturelementen als Abstandshalter zwischen zwei Folienlagen zum Schutz der RFID-Funktion;
Figur 2A eine Draufsicht auf eine Ausführungsform eines RFID-Etiketts als Rundum-Etikett mit Schutz der RFID-Funktion mit Strukturelementen auf einem Abschnitt einer Folienlage zum Schutz der RFID-Funktion;
Figur 2B einen Querschnitt durch die Ausführungsform des RFID-Etiketts der Figur 2A nach dem Aufkleben auf einen Rundkörper;
Figur 3 einen Querschnitt durch eine Ausführungsform eines RFID-Etiketts mit Schutz der RFID-Funktion mit Strukturelementen auf einer Unterseite einer Folienlage zum Schutz der RFID-Funktion;
Figur 4A eine Draufsicht auf eine Ausführungsform eines RFID-Etiketts als Rundum-Etikett mit Schutz der RFID-Funktion mit Strukturelementen auf einer Unterseite eines Abschnitts einer Folienlage zum Schutz der RFID-Funktion;
Figur 4B einen Querschnitt durch die Ausführungsform des RFID-Etiketts der Figur 4A nach dem Aufkleben auf einen Rundkörper;
Figur 5A einen Querschnitt durch eine Ausführungsform eines RFID-Etiketts mit Strukturelementen auf einem Trägersubstrat für einen RFID-Transponderchip zum Schutz der RFID-Funktion;
Figur 5B eine Draufsicht auf ein RFID-Etikett mit Schutz der RFID-Funktion mit Strukturelementen auf einem Trägersubstrat zum Schutz der RFID-Funktion;
Figur 6 eine vergrößerte Darstellung einer senkrechten Projektion auf einen Bereich des RFID-Etiketts mit dem RFID-Transponderchip und punktförmigen Strukturelementen;
Figur 7A eine vergrößerte Darstellung einer senkrechten Projektion auf einen Bereich des RFID-Etiketts mit dem RFID-Transponderchip und rechteckförmigen Strukturelementen;
Figur 7B eine vergrößerte Darstellung einer senkrechten Projektion auf einen Bereich des RFID-Etiketts mit dem RFID-Transponderchip und kreisförmigen Strukturelementen; und
Figur 7C eine vergrößerte Darstellung einer senkrechten Projektion auf einen Bereich des RFID-Etiketts mit dem RFID-Transponderchip und rahmenförmigen Strukturelementen.

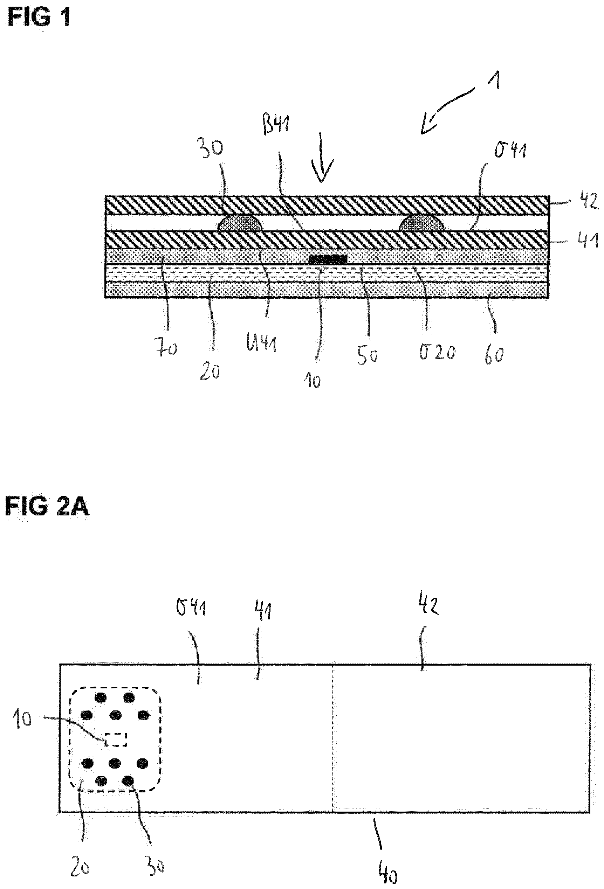

Gemäß der in Figur 1 gezeigten Ausführungsform umfasst das RFID-Etikett 1 mit Schutz der RFID-Funktion vor einer mechanischen Belastung einen RFID-Transponderchip 10, der auf einer Oberseite O20 eines Trägersubstrats 20 angeordnet ist. An den Transponderchip 10 ist eine Antennenstruktur 50 angeschlossen. Die Anordnung aus dem RFID-Transponderchip, der Antennenstruktur und dem Trägersubstrat bilden das RFID-Inlay. An seiner Unterseite weist das RFID-Etikett eine Klebstoffschicht 60 zum Aufkleben des Etiketts auf einen Gegenstand auf.

Das RFID-Etikett 1 weist eine erste Folienlage 41 und mindestens eine zweite Folienlage 42 auf, wobei die mindestens eine zweite Folienlage 42 über der ersten Folienlage 41 angeordnet ist. Des Weiteren umfasst das Etikett Strukturelemente 30, die zwischen der ersten Folienlage 41 und der mindestens einen zweiten Folienlage 42 angeordnet sind. Die Klebstoffschicht 60 ist unter dem RFID-Inlay beziehungsweise unter der ersten Folienlage 41 angeordnet. Die erste Folienlage 41 ist über dem Trägersubstrat 20 und über dem RFID-Transponderchip 10 sowie der Antennenstruktur 50 angeordnet. Das Trägersubstrat 20 mit dem Transponderchip 10 und der Antennenstruktur 50 ist mittels einer Klebstoffschicht 70 an einer Unterseite der ersten Folienlage 41 aufgeklebt.

Die Strukturelemente 30 sind unmittelbar auf der ersten Folienlage 41 angeordnet. Sie sind auf einer Oberseite O41 der ersten Folienlage 41 angeordnet. Die Strukturelemente 30 sind derart ausgebildet und angeordnet, dass zumindest ein Bereich B41 der ersten Folienlage 41, der zwischen den Strukturelementen 30 liegt, von der mindestens einen zweiten Folienlage 42 beabstandet angeordnet ist. Die Strukturelemente 30 sind insbesondere derart ausgebildet und angeordnet, dass die mindestens eine zweite Folienlage 42 in einem Abstand, der durch die Höhe der Strukturelemente 30 bestimmt ist, über dem Bereich B41 der ersten Folienlage 41 angeordnet ist.

Die Strukturelemente 30 sind somit als Abstandshalter auf der Oberfläche O41 der ersten Folienlage 41 angeordnet. Bei einer mechanischen Belastung gemäß der in Figur 1 eingezeichneten Pfeilrichtung von oben auf das RFID-Etikett verhindern die Strukturelemente, dass eine äußere Kraft, beispielsweise durch eine Umlenk- oder Anpressrolle oder durch sonstige Gegenstände, unmittelbar auf den RFID-Transponderchip und auf die Verbindungsstelle zwischen dem Transponderchip und der Antennenstruktur einwirken kann.

Die Strukturelemente können gemäß einer möglichen Ausführungsform verhindern, dass die mindestens eine zweite Folienlage 42 auf den Bereich B41 der ersten Folienlage 41 gepresst wird und somit ein Druck auf den Transponderchip 10 beziehungsweise die angeschlossenen Antennenstrukturen 50 auftritt.

Figur 2A zeigt eine Ausführungsform des RFID-Etiketts 1, das als ein Rundum-Etikett zum Aufkleben auf einen Rundkörper ausgebildet ist. Das RFID-Etikett umfasst eine Folienlage 40 mit einem ersten Abschnitt 41 und einem zweiten Abschnitt 42, der sich in Längsrichtung des Etiketts 1 an den ersten Abschnitt 41 anschließt. Sowohl der erste Abschnitt 41 als auch der zweite Abschnitt 42 können auf ihrer Oberseite eine Beschriftung aufweisen. Die Strukturelemente 30 sind an einer Oberseite O41 des ersten Abschnitts 41 der mindestens einen Folienlage 40 angeordnet. Das Transponder-Inlay mit dem Transponderchip 10, der Antennenstruktur 50 und dem Trägersubstrat 20 ist auf einer Unterseite des Abschnitts 41 der Folienlage 40 angeordnet. Die Strukturelemente 30 sind bei der in Figur 2A gezeigten Ausführungsform auf einem Vorlaufteil des Etiketts angeordnet. Das Transponder-Inlay ist auf der Unterseite des Abschnitts 41 der Folienlage in senkrechter Projektion unter den Strukturelementen 30 angeordnet. Die Position des Transponder-Inlays mit dem Transponderchips 10 ist in Figur 2A strichliert eingezeichnet.

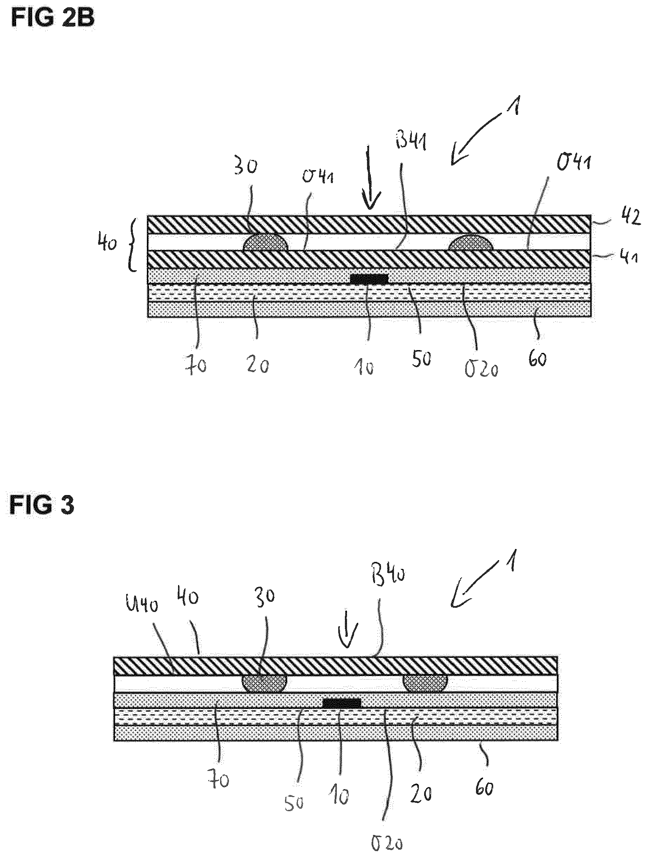

Figur 2B zeigt die nach dem Aufbringen des Rundum-Etiketts auf einen Rundkörper übereinander angeordneten einzelnen Lagen des RFID-Etiketts. Das Transponder-Inlay mit dem Transponderchip 10, dem Trägersubstrat 20 und der Antennenstruktur 50 ist auf der Unterseite U41 des Abschnitts 41 der Folienlage 40 angeordnet. Die Strukturelemente 30 sind auf der Oberseite O41 des Abschnitts 41 der Folienlage 40 angeordnet und von dem Abschnitt 42 der Folienlage 40 nach dem Umwickeln des RFID-Etiketts um den Rundkörper abgedeckt. Das Rundum-Etikett ist derart ausgebildet, dass der zweite Abschnitt 42 der mindestens einen Folienlage 40 nach dem Aufkleben des Rundum-Etiketts 1 auf den Rundkörper über dem ersten Abschnitt 41 der Folienlage 40 angeordnet ist. Der erste Abschnitt 41 ist nach dem Aufkleben des Rundum-Etiketts auf einen Rundkörper von dem über ihm angeordneten zweiten Abschnitt 42 verdeckt.

Die Strukturelemente 30 sind derart ausgebildet, dass eine äußere Kraft, beispielsweise eine Kraft, die durch eine Umlenk- oder Anpressrolle oder durch sonstige Gegenstände, auf das Etikett einwirkt, nicht unmittelbar auf den RFID-Transponderchip und auf die Verbindungsstelle zwischen dem Transponderchip und der Antennenstruktur einwirken kann.

Die Strukturelemente können gemäß einer möglichen Ausführungsform insbesondere derart ausgebildet und auf der Oberseite O41 des Abschnitts 41 der Folienlage 40 angeordnet sein, dass zumindest ein Bereich B41 des ersten Abschnitts 41 der Folienlage 40, der zwischen den Strukturelementen 30 liegt, nach dem Aufkleben des Rundum-Etiketts 1 auf einen Rundkörper von dem zweiten Abschnitt 42 der mindestens einen Folienlage 40 beabstandet angeordnet ist. Die Strukturelemente 30 sind insbesondere derart ausgebildet und angeordnet, dass der zweite Abschnitt 42 der Folienlage 40 nach dem Aufkleben des Rundum-Etiketts 1 auf den Rundkörper in einem Abstand, der durch die Höhe der Strukturelemente 30 bestimmt ist, über dem Bereich B41 des ersten Abschnitts 41 der Folienlage 40 angeordnet ist.

Erst durch die Umwicklung eines Gefäßes mit dem Etikett werden der Transponderchip 10 und die Strukturelemente 30 so übereinander angeordnet, dass eine Schutzfunktion des Transponderchips 10 und der angrenzenden Antennenstruktur 50 gewährleistet ist. Die Strukturelemente wirken in dem Bereich B41 zwischen den Strukturelementen als Abstandshalter und verhindern somit, dass bei einer Krafteinwirkung in Pfeilrichtung eine mechanische Belastung auf den Transponderchip 10 und auf die Verbindungsstelle zwischen dem Transponderchip und der angeschlossene Antennenstruktur 50 ausgeübt wird. Die Strukturelemente können gemäß einer Weiterbildung verhindern, dass der Abschnitt 42 der Folienlage 40 auf den Abschnitt 41 und damit auf den Transponderchip 10 gedrückt wird.

Figur 3 zeigt einen Querschnitt durch eine weitere Ausführungsform des RFID-Etiketts 1 mit Schutz der RFID-Funktion. Das RFID-Etikett 1 umfasst den Transponderchip 10 mit der angeschlossenen Antennenstruktur 50. Der Transponderchip 10 und die Antennenstruktur 50 sind auf der Oberseite O20 eines Trägersubstrats 20 angeordnet und bilden das Transponder-Inlay. Über dem Trägersubstrat 20 beziehungsweise dem Transponderchip 10 und der angrenzenden Antennenstruktur 50 ist eine Folienlage 40 angeordnet. Strukturelemente 30 sind an einer Unterseite U40 der Folienlage 40 angeordnet. Zum Aufkleben des RFID-Etiketts auf einen Gegenstand ist die Unterseite des Trägersubstrats 20 mit einer Klebstoffschicht 60 beschichtet. Die Folienlage 40 ist mit Hilfe einer weiteren Klebstoffschicht 70 auf dem Trägersubstrat 20 aufgeklebt.

Gemäß einer möglichen Ausführungsform können die Strukturelemente derart angeordnet sein, dass ein Bereich B40 der Folienlage 40, der zwischen den Strukturelementen 30 liegt, in einem Abstand zu dem RFID-Transponderchip 10 angeordnet ist. Der Abstand wird dabei durch die Höhe der Strukturelemente 30 bestimmt. In dem Bereich B40 zwischen den Strukturelementen 30 ist die Folienlage 40 in einem Abstand zu dem Trägersubstrat 20 beziehungsweise zu dem RFID-Transponderchip 10 und der angeschlossenen Antennenstruktur 50 angeordnet.

Bei der in Figur 3 gezeigten Ausführungsform des RFID-Etiketts sind die Strukturelemente 30 derart an der Unterseite U40 der Folienlage 40 angeordnet und derart ausgebildet, dass bei einer äußeren Krafteinwirkung auf das RFID-Etikett keine unmittelbare Krafteinwirkung auf den Transponderchip und die Verbindungsstelle zwischen Transponderchip und Antenne erfolgt. Die Strukturelemente 30 können insbesondere derart ausgebildet und angeordnet sein, dass der Bereich B40 bei einer Krafteinwirkung in Pfeilrichtung, das heißt von oben, auf die Folienlage 40 durch die Strukturelemente 30 in einem Abstand zu dem Transponderchip 10 und der angeschlossenen Antennenstruktur 50 gehalten wird. Somit können äußere mechanische Belastungen nicht unmittelbar auf den Transponderchip 10 und die angeschlossene Antennenstruktur 50 einwirken.

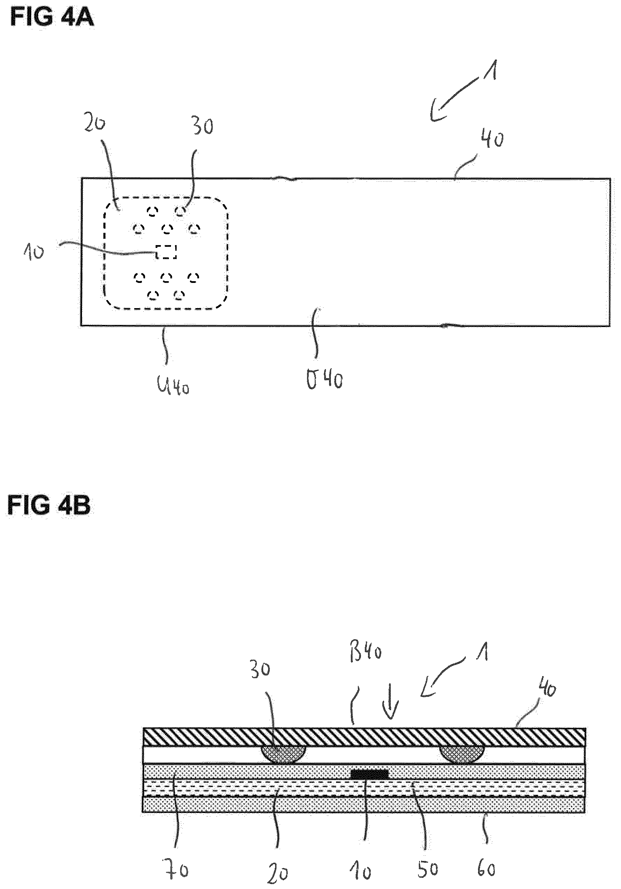

Figur 4A zeigt eine Draufsicht auf eine Ausführungsform eines RFID-Etiketts 1, das als Rundum-Etikett zum Aufkleben auf einen Rundkörper ausgebildet ist. Das RFID-Etikett umfasst ein Trägersubstrat 20, auf dessen Oberseite der Transponderchip 10 mit der angeschlossenen Antennenstruktur angeordnet ist. Das RFID-Etikett umfasst eine Folienlage 40, auf dessen Oberseite O40 eine Beschriftung angebracht sein kann. An der Unterseite U40 der Folienlage 40 sind Strukturelemente 30 angeordnet. Das Transponder-Inlay ist auf der Unterseite U40 der Folienlage 40 derart angeordnet, dass die Strukturelemente 30 von dem Trägersubstrat 20 überdeckt sind. Die Position des Transponder-Inlays mit dem Transponderchips 10 auf der Unterseite der Folienlage 40 ist in Figur 4A strichliert eingezeichnet.

Figur 4B zeigt das Rundum-Etikett 1 der Figur 4A nach dem Aufkleben auf einen Rundkörper. Das Rundum-Etikett ist mit einer an seiner Unterseite angeordneten Klebstoffschicht 60 auf einen in Figur 4B nicht dargestellten Rundkörper aufgeklebt. Die Strukturelemente 30 sind als Abstandshalter ausgebildet und verhindern bei einer mechanischen Belastung, dass beispielsweise eine Kraft, die von der Oberseite O40 der Folienlage 40 auf das RFID-Etikett einwirkt, unmittelbar auf den Transponderchip 10 und die angeschlossene Antennenstruktur 50 übertragen wird.

Gemäß einer möglichen Ausführungsform können die Strukturelemente 30 derart angeordnet sein, dass ein Bereich B40 der Folienlage 40, der zwischen den Strukturelementen 30 liegt, nach dem Aufkleben des Rundum-Etiketts 1 auf den Rundkörper in einem Abstand zu dem RFID-Transponderchip 10 angeordnet ist. Der Abstand wird dabei durch die Höhe der Strukturelemente 30 bestimmt.

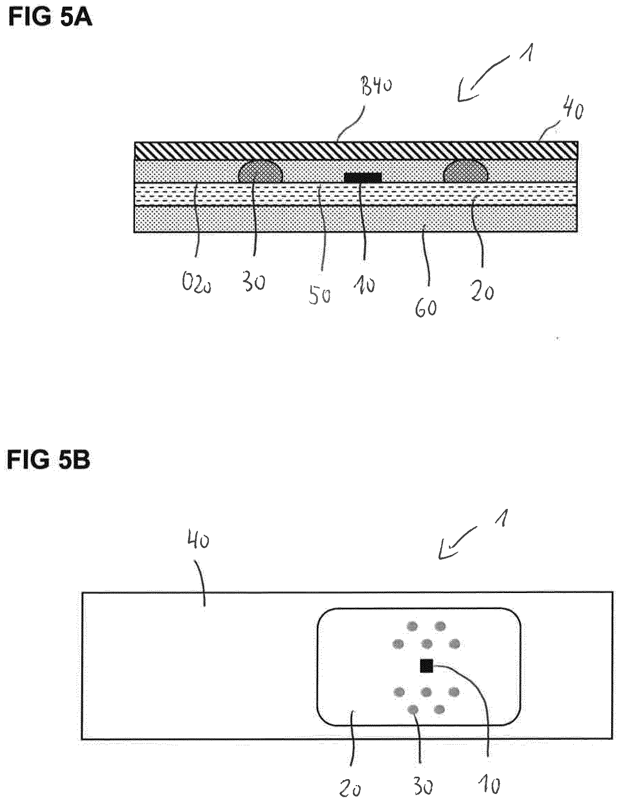

Figur 5A zeigt einen Querschnitt durch eine weitere Ausführungsform eines RFID-Etiketts 1 mit Schutz der Transponderfunktionalität. Bei der in Figur 5A dargestellten Ausführungsform des RFID-Etiketts sind die Strukturelemente 30 im Unterschied zu der in Figur 3 gezeigten Ausführungsform unmittelbar auf einer Oberseite O20 des Trägersubstrats 20 angeordnet.

Figur 5B zeigt eine Draufsicht auf eine Unterseite U40 der Folienlage 40, auf der das Transponder-Inlay mit dem Trägersubstrat 20, dem RFID-Transponderchip 10 und der nicht gezeigten Antennenstruktur angeordnet ist. Der RFID-Transponderchip 10 und die Antennenstruktur sind zusammen mit den Strukturelementen 30 auf der Oberseite des Trägersubstrats 20 angeordnet. Die Strukturelemente sind derart ausgebildet, dass durch sie eine direkte äußere Krafteinwirkung, beispielsweise von einer Fertigungsmaschine oder einem sonstigen Gegenstand, auf den Transponderchip oder die Verbindungsstelle zur Antennenstruktur verhindert wird. Der Transponderchip und die an ihn angeschlossene Antennenstruktur sind daher durch die Strukturelemente vor einer mechanischen Beschädigung geschützt.

Gemäß einer Ausführungsform sind die Strukturelemente 30 derart ausgebildet und auf dem Trägersubstrat 20 angeordnet, dass die Folienlage 40 in einem Abstand, der durch die Höhe der Strukturelemente 30 bestimmt ist, über dem RFID-Transponderchip 10 angeordnet ist. Die Strukturelemente 30 sind auf dem Trägersubstrat 20 als Abstandshalter ausgebildet, die die Folienlage 40 in einem Abstand über dem RFID-Transponderchip 10 halten, insbesondere wenn von oben in Richtung der Folienlage 40 eine mechanische Belastung auf das RFID-Etikett einwirkt.

Das in den Figuren 5A und 5B gezeigte RFID-Etikett kann als ein Rundum-Etikett zum Aufkleben auf einen Rundkörper ausgebildet sein. In diesem Fall legt sich die Folienlage 40 beim Etikettieren des Rundkörpers gegebenenfalls in mehreren Lagen über die Strukturelemente 30. Die Strukturelemente verhindern, dass Teile einer Fertigungseinrichtung oder Teile anderer Gegenstände unmittelbar mit dem Transponderchip und der Verbindungsstelle zur Antenne in Berührung kommen.

Gemäß einer möglichen Ausführungsform können die Strukturelemente im auf den Rundkörper aufgeklebten Zustand des Etiketts in dem Bereich B40 als Abstandshalter zwischen den Transponderstrukturen und der darüber gegebenenfalls in mehreren Lagen angeordneten Folienlage 40 wirken. Beim Ausüben einer Kraft von oben auf die Folienlage 40 verhindern die Strukturelemente 30, dass der Bereich B40 der Folienlage 40 mit den Transponderchip 10 beziehungsweise der an ihn angeschlossenen Antennenstruktur in Berührung kommt und das Transponder-Inlay beschädigt wird.

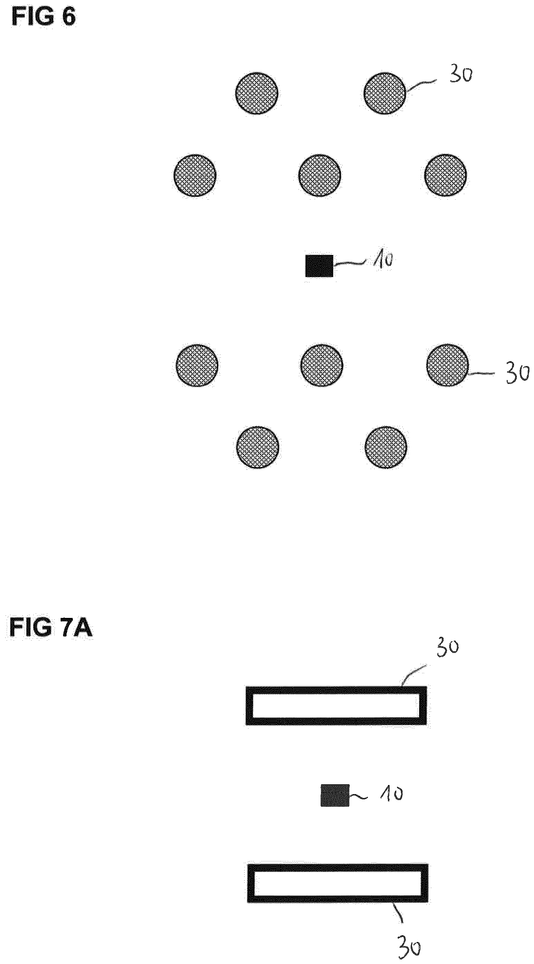

Figur 6 zeigt eine senkrechte Projektion von oben auf das RFID-Etikett, der in den Figuren 1 bis 5B gezeigten Ausführungsformen. Bei der senkrechten Projektion sind der Einfachheit halber nur der Transponderchip 10 sowie die Strukturelemente 30 dargestellt. Die Strukturelemente 30 sind in der senkrechten Projektion bei allen Ausführungsformen des RFID-Etiketts seitlich beziehungsweise horizontal versetzt zu dem RFID-Transponderchip 10 angeordnet. Der Transponderchip 10 und die Strukturelemente 30 können, wie in den Figuren 1 bis 4B gezeigt, auf unterschiedlichen Folienlagen des RFID-Etiketts angeordnet sein. Der Transponderchip 10 und die Strukturelemente 30 können auch, wie in den Figu-ren 5A und 5B gezeigt, auf der gleichen Folienlage, das heißt auf dem Trägersubstrat 20, angeordnet sein.

Die Strukturelemente 30 sind in der senkrechten Projektion insbesondere derart um die Position des Transponderchips 10 angeordnet, dass eine äußere Krafteinwirkung, bei der eine Kraft von oben auf das RFID-Etikett ausgeübt wird, von den Strukturelementen 30 aufgenommen wird. Dadurch wird verhindert, dass eine Druckkraft auf das Etikett unmittelbar auf den Transponderchip 10 beziehungsweise die Verbindungsstelle zu der an den Transponderchip angeschlossenen Antennenstruktur 50 ausgeübt wird. Die Strukturelemente wirken somit als Abstandshalter, die von außen auf das Etikett einwirkende Einrichtungen, beispielsweise Umlenk- oder Anpressrollen einer Verarbeitungseinrichtung oder auch Gegenstände, auf die das RFID-Etikett appliziert wird, von dem RFID-Transponderchip und der Verbindungsstelle zu der angeschlossenen Antennenstruktur fernhalten.

Die Strukturelemente können eine gewisse Kompressibilität aufweisen, wobei allerdings sichergestellt ist, dass Komponenten einer Fertigungsmaschine, beispielsweise Umlenk- und Anpressrollen oder andere Gegenstände, nicht unmittelbar mit dem Transponderchip und der Verbindungsstelle zur Antennenstruktur in Kontakt kommen, so dass die Funktion der Strukturelemente als Abstandshalter zu den Komponenten der Fertigungsmaschine gewahrt bleibt. Die Strukturelemente können beispielsweise einen Abstand zu dem Transponderchip und der Verbindungsstelle zur Antennenstruktur aufweisen, der sicherstellt, dass die Komponenten der Fertigungseinrichtung oder sonstige Gegenstände zwar mit den Strukturelementen selbst, nicht aber mit dem Transponderchip und der Verbindungsstelle zur Antennenstruktur in Kontakt kommen. Gemäß einer möglichen Ausführungsform kommt zumindest die äußere der über dem Transponderchip angeordneten Folienlagen bei einer Krafteinwirkung auf das RFID-Etikett nicht mit dem Transponderchip in Berührung.

Der Transponderchip 10 kann auf dem Trägersubstrat 20 in senkrechter Projektion beispielsweise an einer zentralen Position zwischen den Strukturelementen 30 angeordnet sein. Die Strukturelemente 30 sind in senkrechter Projektion beabstandet zu dem Transponderchip 10 angeordnet. Darüber hinaus sind die Strukturelemente 30 zueinander beabstandet angeordnet. Die Strukturelemente 30 können beispielsweise in senkrechter Projektion in einem Muster, punktsymmetrisch oder nicht symmetrisch, um den Transponderchip 10 angeordnet sein. Die Strukturelemente 30 bilden auf der Folienlage, auf der sie angeordnet sind, ein musterförmiges Höhenprofil.

Die Abstände ermöglichen es, dass der Transponderchip trotz vorhandener Positionierungstoleranzen bei der Herstellung des RFID-Etiketts von den Strukturelementen 30 umgeben ist. Die Strukturelemente 30 können beispielsweise als tropfenförmige oder punktförmige oder annähernd punktartige Einzelelemente ausgeführt sein. Die Strukturelemente können aus einem Lack, beispielsweise einem Haptik-Lack, ausgebildet sein, der auf die Folienlage 40 oder die Folienlage 41 oder auf das Trägersubstrat 20 aufgebracht ist.

Die Strukturelemente 30 können in senkrechter Projektion auf das Etikett vollständig oder nur teilweise um den Transponderchip herum angeordnet sein. Die Strukturelemente können, wie bei den in den Figuren gezeigten Ausführungsformen, in senkrechter Projektion nur an zwei entgegengesetzten Seiten des Transponderchips 10 angeordnet sein. Die Strukturelemente können zum Beispiel in senkrechter Projektion in einer oder mehr als einer Reihe beabstandet zu dem Transponderchip angeordnet sein. Bei den gezeigten Ausführungsformen sind in senkrechter Projektion jeweils fünf Strukturelemente 30 auf einer Seite des Transponderchips 10 und fünf weitere Strukturelemente 30 auf einer gegenüberliegenden Seite des Transponderchips 10 angeordnet.

Bei sämtlichen der in den Figuren 1A bis 5B gezeigten Ausführungsformen können die Strukturelemente 30 in einem Druckverfahren (z. B. Siebdruck oder Inkjetdruck) oder mittels eines Klebstoffauftragsverfahrens (z.B. Dispensen) auf der Ober- oder Unterseite der Folienlage 40, 41 oder auf der Oberseite des Trägersubstrats 20 angeordnet sein. Die Höhe der einzelnen Strukturelemente 30 ist dabei so auszulegen, dass der Transponderchip und die angrenzende Antennenstruktur in Abhängigkeit von der zu erwartenden mechanischen Belastung vor einer einwirkenden äußeren Kraft geschützt sind. Die Strukturelemente 30 können beispielsweise eine Höhe aufweisen, die größer als die Höhe des RFID-Transponderchips 10 ist. Die Strukturelemente können beispielsweise doppelt so hoch wie der Transponderchip 10 sein.

Da die Strukturelemente 30 bei einem Druckprozess aufgebracht werden können, kann das Drucken der Strukturelemente 30 im gleichen Durchlauf wie der Druck des eigentlichen Druckbildes des RFID-Etiketts erfolgen. Dadurch entfällt ein zusätzlicher Verfahrensschritt bei der Herstellung des Etiketts.

Es ist allerdings auch möglich, anstelle von gedruckten Strukturelementen dünnen Plättchen aus Kunststoff, Gummi, Kautschuk oder Kork zu verwenden. Diese Plättchen können bei der in Figur 1 gezeigten Ausführungsform auf einer Oberseite der Folienlage 41 beziehungsweise bei der in den Figuren 2A und 2B gezeigten Ausführungsform auf einer Oberseite des Abschnitts 41 der Folienlage 40 angeordnet sein. Bei den in den Figuren 3, 4A und 4B gezeigten Ausführungsformen sind die Plättchen auf einer Unterseite der Folienlage 40 angeordnet. Bei der in den Figuren 5A und 5B gezeigten Ausführungsform sind die Plättchen auf einer Oberseite des Trägersubstrats 20 angeordnet. Bei der Ausgestaltung der Strukturelemente in Form von dünnen Plättchen können die Strukturelemente im Spendebetrieb auf die entsprechenden Lagen des RFID-Etiketts aufgebracht werden.

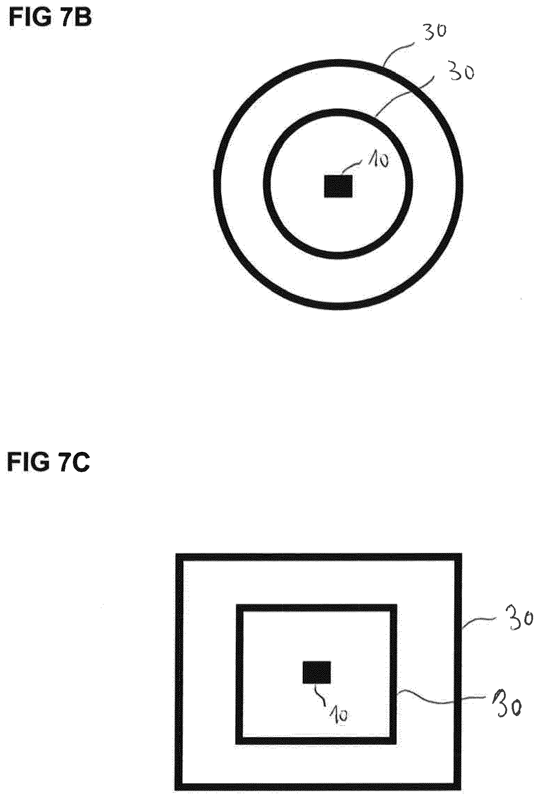

Die Figuren 7A, 7B und 7C zeigen Draufsichten im Sinne von Durchsichten durch ein RFID-Etikett, das heißt eine senkrechte Projektion auf ein RFID-Etikett, wobei nur die räumliche Lage der Strukturelemente 30 zu dem RFID-Transponderchip 10 dargestellt ist. Die Antennenstruktur grenzt unmittelbar an den Transponderchip an. Die Verbindungsstelle kann sich seitlich an dem Transponderchip oder an der Unterseite des Transponderchips befinden. In sämtlichen Ausführungsformen sind die Strukturelemente 30 in senkrechter Projektion auf das Etikett beziehungsweise den RFID-Transponderchip 10 seitlich beziehungsweise horizontal versetzt zu dem Transponderchip 10 angeordnet. Die Strukturelemente 30 sind, wie bei den in den Figuren 5A und 5B gezeigten Ausführungsformen, auf dem Trägersubstrat oder, wie bei den in den Figuren 1 bis 4B
gezeigten Ausführungsformen, auf einer sonstigen Folienlage des RFID-Etiketts angeordnet.

Die in den Figuren 1 bis 5B gezeigten punktförmigen Strukturelemente 30 können durch Strukturelemente 30, die eine andere geometrische Form, beispielsweise eine der in den Figuren 7A bis 7C gezeigte Form, aufweisen, ersetzt werden. Neben den in den Figuren 7A, 7B und 7C gezeigten Formen der Strukturelemente 30 sind auch weitere geometrische Formen möglich.

Figur 7A zeigt eine vergrößerte Darstellung einer senkrechten Projektion auf einen Bereich des RFID-Etiketts mit dem RFID-Transponderchip 10 und rechteckförmigen Strukturelementen 30. Die Strukturelemente 30 können als Schichten ausgebildet sein, die in der Draufsicht eine rechteckförmige oder alternativ dazu eine quadratische Form haben. Die Schichten können vollflächig ausgebildet sein. Gemäß einer anderen Ausführungsform können die Strukturelemente 30 als ein rechteck- oder quadratförmiger Rahmen ausgebildet sein.

Figur 7B zeigt eine vergrößerte Darstellung einer senkrechten Projektion auf einen Bereich des RFID-Etiketts mit dem RFID-Transponderchip 10 und kreisförmigen Strukturelementen 30. Gemäß einer Ausführungsform können in einer senkrechten Projektion auf das RFID-Etikett mehrere zueinander beabstandete kreisringförmige Strukturelemente 30 in einem Abstand um den RFID-Transponderchip 10 angeordnet sein. Die Strukturelemente 30 können als Schichten ausgebildet sein, die in der Draufsicht eine kreisförmige Form haben.

Figur 7C zeigt eine vergrößerte Darstellung einer senkrechten Projektion auf einen Bereich des RFID-Etiketts mit dem RFID-Transponderchip 10 und rahmenförmigen Strukturelementen 30. In einer senkrechten Projektion auf das

RFID-Etikett können mehrere kreisringförmige Strukturelemente 30 beabstandet zueinander und in einem Abstand um den Transponderchip 10 angeordnet sein.

### Bezugszeichenliste

- 1: RFID-Etikett
- 10: Transponderchip
- 20: Trägersubstrat
- 30: Strukturelemente
- 40, 41, 42: Folienlage/ Abschnitte der Folienlage
- 50: Antennenstruktur
- 60, 70: Klebstoffschicht

## Patentansprüche

1. RFID-Etikett mit Schutz der elektronischen RFID-Funktionalität, umfassend:
- einen RFID-Transponderchip (10),
- ein Trägersubstrat (20), auf dem der RFID-Transponderchip (10) angeordnet ist,
- mehrere Strukturelemente (30), die in senkrechter Projektion in Form einer Draufsicht auf das RFID-Etikett seitlich versetzt zu dem RFID-Transponderchip (10) angeordnet sind,
wobei die Strukturelemente (30) in einem Abstand zu dem RFID-Transponderchip und untereinander beanstandet angeordnet sind und als Abstandshalter wirken, so dass eine bei einer mechanischen Belastung auf das Etikett einwirkende Kraft nicht von dem RFID-Transponderchip (10), sondern durch die Strukturelemente (30) aufgenommen wird,
**dadurch gekennzeichnet, dass** die Strukturelemente (30) jeweils als ein gedruckter oder ein mittels eines Klebstoffauftragsverfahrens aufgebrachter Lack- oder ausgehärteter Klebstoffpunkt ausgestaltet sind.

2. RFID-Etikett nach Anspruch 1,
wobei die mehreren Strukturelemente (30) unmittelbar auf dem Trägersubstrat (20) angeordnet sind.

3. RFID-Etikett nach einem der Ansprüche 1 oder 2, umfassend:
- eine Folienlage (40), die in einer Queransicht auf das Etikett die oberste Lage des Etiketts darstellt,
- wobei die Strukturelemente (30) derart ausgebildet und angeordnet sind, dass die Folienlage (40) in einem Abstand, der durch die Höhe der Strukturelemente (30) bestimmt ist, über dem RFID-Transponderchip (10) angeordnet ist.

4. RFID-Etikett nach Anspruch 1, umfassend:
- eine erste Folienlage (41) und eine zweite Folienlage (42), wobei die zweite Folienlage (42) in einer Queransicht auf das Etikett die oberste Lage des Etiketts darstellt,
- wobei die erste Folienlage (41) in einer Queransicht auf das Etikett über dem RFID-Transponderchip (10) angeordnet ist,
- wobei das mindestens eine Strukturelement (30) unmittelbar auf der ersten Folienlage (41) angeordnet ist.

5. RFID-Etikett nach Anspruch 4,
- wobei die mehreren Strukturelemente (30) unmittelbar auf der ersten Folienlage (41) angeordnet sind,
- wobei die Strukturelemente (30) derart ausgebildet und angeordnet sind, dass zumindest ein Bereich (B41) der ersten Folienlage (41), der zwischen den Strukturelementen (30) liegt, von der zweiten Folienlage (42) beabstandet angeordnet ist.

6. RFID-Etikett nach Anspruch 5,
wobei die Strukturelemente (30) derart ausgebildet und angeordnet sind, dass die zweite Folienlage (42) in einem Abstand, der durch die Höhe der Strukturelemente (30) bestimmt ist, über dem Bereich (B41) der ersten Folienlage (41) angeordnet ist.

7. RFID-Etikett nach Anspruch 1, umfassend:
- eine Folienlage (40) mit einem ersten Abschnitt (41) und mit mindestens einem zweiten Abschnitt (42), der sich in Längsrichtung des Etiketts (1) an den ersten Abschnitt (41) anschließt, wobei die Folienlage (40) in der Queransicht auf das Etikett die oberste Lage des Etiketts darstellt,
- wobei die Strukturelemente (30) in einer Queransicht auf das Etikett an einer Oberseite (O41) des ersten Abschnitts (41) der mindestens einen Folienlage (40) angeordnet sind.

8. RFID-Etikett nach Anspruch 7,
- wobei das Etikett (1) derart ausgebildet ist, dass der zweite Abschnitt (42) der Folienlage (40) nach dem Aufkleben des Etiketts (1) auf einen Rundkörper über dem ersten Abschnitt (41) der Folienlage (40) angeordnet ist, wenn der Umfang des Rundkörpers kleiner als die Länge des Etiketts (1) ist,
- wobei die Strukturelemente (30) derart ausgebildet und angeordnet sind, dass zumindest ein Bereich (B41) des ersten Abschnitts (41) der Folienlage (40), der zwischen den Strukturelementen (30) liegt, nach dem Aufkleben des Etiketts (1) auf den Rundkörper von dem zweiten Abschnitt (42) der Folienlage (40) beabstandet angeordnet ist.

9. RFID-Etikett nach Anspruch 8,
wobei die Strukturelemente (30) derart ausgebildet und angeordnet sind, dass der zweite Abschnitt (42) der Folienlage (40) nach dem Aufkleben des Etiketts (1) auf den Rundkörper in einem Abstand, der durch die Höhe der Strukturelemente (30) bestimmt ist, über dem Bereich (B41) des ersten Abschnitts (41) der Folienlage (40) angeordnet ist.

10. RFID-Etikett nach Anspruch 1, umfassend:
- eine Folienlage (40), die in einer Queransicht auf das Etikett die oberste Lage des Etiketts darstellt,
- wobei die Strukturelemente (30) in der Queransicht auf das Etikett an einer Unterseite (U40) der Folienlage (40) derart angeordnet sind, dass ein Bereich (B40) der Folienlage (40), der zwischen den Strukturelementen (30) liegt, in einem Abstand zu dem RFID-Transponderchip (10) angeordnet ist,
- wobei der Abstand durch die Höhe der Strukturelemente (30) bestimmt ist.

11. RFID-Etikett nach Anspruch 1, umfassend:
- eine Folienlage (40), die in einer Queransicht auf das Etikett die oberste Lage des Etiketts darstellt,
- wobei die Strukturelemente (30) an einer Unterseite (U40) der Folienlage (40) derart angeordnet sind, dass ein Bereich (B40) der Folienlage (40), der zwischen den Strukturelementen (30) liegt, nach dem Aufkleben des Etiketts (1) auf den Rundkörper in einem Abstand zu dem RFID-Transponderchip (10) angeordnet ist,
- wobei der Abstand durch die Höhe der Strukturelemente (30) bestimmt ist.

12. RFID-Etikett nach einem der Ansprüche 1 bis 11,
wobei die Strukturelemente (30) eine Höhe aufweisen, die größer als die Höhe des RFID-Transponderchips (10) ist.

## Claims

1. An RFID label with protection of the electronic RFID functionality, comprising:
- an RFID transponder chip (10),
- a support substrate (20) on which the RFID transponder chip (10) is arranged,
- several structural elements (30) which are arranged laterally offset from the RFID transponder chip (10) in perpendicular projection in the form of a top view on the RFID label,
wherein the structural elements (30) are arranged at a distance from the RFID transponder chip and spaced apart from one another and act as spacers so that a force acting on the label under mechanical stress is not absorbed by the RFID transponder chip (10), but by the structural elements (30),
**characterized in that** the structural elements (30) are each designed as a varnish dot or cured glue dot which is printed or applied by means of a glue application process.

2. The RFID label according to claim 1,
wherein the several structural elements (30) are arranged directly on the carrier substrate (20).

3. The RFID label according to any of claims 1 or 2, comprising:
- a film layer (40) which represents the topmost layer of the label in a cross-sectional view of the label,
- wherein the structural elements (30) are formed and arranged in such a way that the film layer (40) is arranged above the RFID transponder chip (10) at a distance which is determined by the height of the structural elements (30).

4. The RFID label according to claim 1, comprising:
- a first film layer (41) and a second film layer (42), wherein the second film layer (42) represents the topmost layer of the label in a cross-sectional view of the label,
- wherein the first film layer (41) is arranged above the RFID transponder chip (10) in a cross-sectional view of the label,
- wherein the at least one structural element (30) is arranged directly on the first film layer (41).

5. The RFID label according to claim 4,
- wherein the several structural elements (30) are arranged directly on the first film layer (41),
- wherein the structural elements (30) are formed and arranged in such a way that at least one area (B41) of the first film layer (41) which is located between the structural elements (30) is arranged at a distance from the second film layer (42).

6. The RFID label according to claim 5,
wherein the structural elements (30) are formed and arranged in such a way that the second film layer (42) is arranged above the area (B41) of the first film layer (41) at a distance which is determined by the height of the structural elements (30).

7. The RFID label according to claim 1, comprising:
- a film layer (40) having a first section (41) and at least one second section (42) which adjoins the first section (41) in the longitudinal direction of the label (1), wherein the film layer (40) represents the topmost layer of the label in the cross-sectional view of the label,
- wherein the structural elements (30) are arranged at an upper side (O41) of the first section (41) of the at least one film layer (40) in a cross-sectional view of the label.

8. The RFID label according to claim 7,
- wherein the label (1) is formed in such a way that the second section (42) of the film layer (40) is arranged above the first section (41) of the film layer (40) after the label (1) has been bonded to a round body if the circumference of the round body is smaller than the length of the label (1),
- wherein the structural elements (30) are formed and arranged in such a way that at least one area (B41) of the first section (41) of the film layer (40) which is located between the structural elements (30) is arranged so as to be spaced apart from the second section (42) of the film layer (40) after the label (1) has been bonded to the round body.

9. The RFID label according to claim 8,
wherein the structural elements (30) are formed and arranged in such a way that the second section (42) of the film layer (40), after the label (1) has been bonded to the round body, is arranged above the area (B41) of the first section (41) of the film layer (40) at a distance which is determined by the height of the structural elements (30).

10. The RFID label according to claim 1, comprising:
- a film layer (40) which represents the topmost layer of the label in a cross-sectional view of the label,
- wherein the structural elements (30) are arranged at a lower side (U40) of the film layer (40) in the cross-sectional view of the label in such a way that an area (B40) of the film layer (40) which is located between the structural elements (30) is arranged at a distance from the RFID transponder chip (10),
- wherein the distance is determined by the height of the structural elements (30).

11. The RFID label according to claim 1, comprising:
- a film layer (40) which represents the topmost layer of the label in a cross-sectional view of the label,
- wherein the structural elements (30) are arranged at a lower side (U40) of the film layer (40) in such a way that an area (B40) of the film layer (40) which is located between the structural elements (30) is arranged at a distance from the RFID transponder chip (10) after the label (1) has been bonded to the round body,
- wherein the distance is determined by the height of the structural elements (30).

12. The RFID label according to any of claims 1 to 11,
wherein the structural elements (30) have a height which is larger than the height of the RFID transponder chip (10).

## Revendications

1. Étiquette RFID à protection de la fonctionnalité RFID électronique, comprenant :
- une puce de transpondeur RFID (10),
- un substrat de support (20) sur lequel la puce de transpondeur RFID (10) est disposée,
- plusieurs éléments structurels (30) qui sont disposés de manière latéralement décalée par rapport à la puce de transpondeur RFID (10) en projection verticale sous forme d'une vue de dessus sur l'étiquette RFID,
sachant que les éléments structurels (30) sont disposés à une distance de la puce de transpondeur RFID et de manière espacée les uns par rapport aux autres et agissent comme espaceurs afin qu'une force s'exerçant sur l'étiquette lors d'une contrainte mécanique ne soit pas absorbée par la puce de transpondeur RFID (10), mais par les éléments structurels (30),
**caractérisée en ce que** les éléments structurels (30) sont configurés respectivement comme un point de vernis ou un point de colle durci qui est imprimé ou appliqué au moyen d'un processus d'application de colle.

2. Étiquette RFID selon la revendication 1,
sachant que les plusieurs éléments structurels (30) sont disposés directement sur le substrat de support (20).

3. Étiquette RFID selon l'une des revendications 1 ou 2, comprenant :
- une couche en film (40) qui représente la couche supérieure de l'étiquette dans une vue transversale sur l'étiquette,
- sachant que les éléments structurels (30) sont constitués et disposés de telle manière que la couche en film (40) soit disposée au-dessus de la puce de transpondeur RFID (10) à une distance qui est déterminée par la hauteur des éléments structurels (30).

4. Étiquette RFID selon la revendication 1,
comprenant :
- une première couche en film (41) et une deuxième couche en film (42), sachant que la deuxième couche en film (42) représente la couche supérieure de l'étiquette dans une vue transversale sur l'étiquette,
- sachant que la première couche en film (41) est disposée au-dessus de la puce de transpondeur RFID (10) dans une vue transversale sur l'étiquette,
- sachant que l'au moins un élément structurel (30) est disposé directement sur la première couche en film (41).

5. Étiquette RFID selon la revendication 4,
- sachant que les plusieurs éléments structurels (30) sont disposés directement sur la première couche en film (41),
- sachant que les éléments structurels (30) sont constitués et disposés de telle manière qu'au moins une zone (B41) de la première couche en film (41) qui est située entre les éléments structurels (30) soit disposée de manière espacée par rapport à la deuxième couche en film (42).

6. Étiquette RFID selon la revendication 5,
sachant que les éléments structurels (30) sont constitués et disposés de telle manière que la deuxième couche en film (42) soit disposée au-dessus de la zone (B41) de la première couche en film (41) à une distance qui est déterminée par la hauteur des éléments structurels (30).

7. Étiquette RFID selon la revendication 1, comprenant :
- une couche en film (40) avec une première section (41) et avec au moins une deuxième section (42) qui se situe dans le prolongement de la première section (41) en direction longitudinale de l'étiquette (1), sachant que la couche en film (40) représente la couche supérieure de l'étiquette dans la vue transversale sur l'étiquette,
- sachant que les éléments structurels (30) sont disposés au niveau d'un côté supérieur (O41) de la première section (41) de l'au moins une couche de film (40) dans une vue transversale sur l'étiquette.

8. Étiquette RFID selon la revendication 7,
- sachant que l'étiquette (1) est constituée de telle manière que la deuxième section (42) de la couche en film (40) soit disposée au-dessus de la première section (41) de la couche en film (40) après le collage de l'étiquette (1) sur un corps rond si la circonférence du corps rond est plus petite que la longueur de l'étiquette (1),
- sachant que les éléments structurels (30) sont constitués et disposés de telle manière qu'au moins une zone (B41) de la première section (41) de la couche en film (40) qui est située entre les éléments structurels (30) soit disposée de manière espacée par rapport à la deuxième section (42) de la couche en film (40) après le collage de l'étiquette (1) sur le corps rond.

9. Étiquette selon la revendication 8,
sachant que les éléments structurels (30) sont constitués et disposés de telle manière que la deuxième section (42) de la couche en film (40), après le collage de l'étiquette (1) sur le corps rond, soit disposée au-dessus de la zone (B41) de la première section (41) de la couche de film (40) à une distance qui est déterminée par la hauteur des éléments structurels (30).

10. Étiquette RFID selon la revendication 1,
comprenant :
- une couche en film (40) qui représente la couche supérieure de l'étiquette dans une vue transversale sur l'étiquette,
- sachant que les éléments structurels (30) sont disposés au niveau d'un côté inférieur (U40) de la couche en film (40) dans la vue transversale sur l'étiquette de telle manière qu'une zone (B40) de la couche en film (40) qui est située entre les éléments structurels (30) soit disposée à une distance de la puce de transpondeur RFID (10),
- sachant que la distance est déterminée par la hauteur des éléments structurels (30).

11. Étiquette RFID selon la revendication 1, comprenant :
- une couche en film (40) qui représente la couche supérieure de l'étiquette dans une vue transversale sur l'étiquette,
- sachant que les éléments structurels (30) sont disposés au niveau d'un côté inférieur (U40) de la couche en film (40) de telle manière qu'une zone (B40) de la couche en film (40) qui est située entre les éléments structurels (30) soit disposée à une distance de la puce de transpondeur RFID (10) après le collage de l'étiquette (1) sur le corps rond,
- sachant que la distance est déterminée par la hauteur des éléments structurels (30).

12. Étiquette RFID selon l'une des revendications 1 à 11,
sachant que les éléments structurels (30) présentent une hauteur qui est plus grande que la hauteur de la puce de transpondeur RFID (10).
